# EUROPEAN PATENT APPLICATION

(11) **EP 1 093 273 A1**
(43) Date of publication of application: **18.04.2001**
(21) Application number: 00922893.3
(22) Date of filing: 27.04.2000
(51) Int. Cl.: H04L 29/14, H04L 12/437, H04B 17/00, H04B 10/08

(54) **COMMUNICATION SYSTEM AND ITS METHOD, AND COMMUNICATION DEVICE**

(30) Priority: 28.04.1999 JP 12313899
(71) Applicant: THE FURUKAWA ELECTRIC CO., LTD., Tokyo 100-8322 (JP)
(72) Inventor: MIZUTANI, Tomoaki, The Furukawa Electric Co., Ltd., Chiyoda-ku, Tokyo 100-8322 (JP); UEKI, Ken, The Furukawa Electric Co., Ltd., Chiyoda-ku, Tokyo 100-8322 (JP)
(74) Representative: Schmidt-Evers, Jürgen, Dipl.-Ing.
(86) International application number: JP0002775
(87) International publication number: WO0067451

(57) **Abstract**

A communication system capable of more reliably collecting monitoring results of monitoring modules of end terminals and repeaters by a monitoring terminal is provided. A monitoring terminal 45 transmits a monitoring result request signal S46a designating an optical transmission line 10 as a response route via an optical transmission line 11 to a repeater 42, while a monitoring module 44 of the repeater 42 transmits a monitoring result response signal S47a indicating the monitoring result via the optical transmission line 10 to the monitoring terminal 45. In this case, due to disconnection, the monitoring terminal 45 does not receive the monitoring result response signal S47a. Next, the monitoring terminal 45 transmits the monitoring result request signal S46a designating the optical transmission line 11 as the response route via the optical transmission line 11 to the repeater 42. Then, the repeater 42 transmits the monitoring result response signal S47a via the optical transmission line 11 to the monitoring terminal 45.

## Description

### TECHNICAL FIELD

The present invention relates to a communication system and method capable of monitoring an operating state of repeaters etc. on a transmission line and a communication apparatus using the same.

### BACKGROUND ART

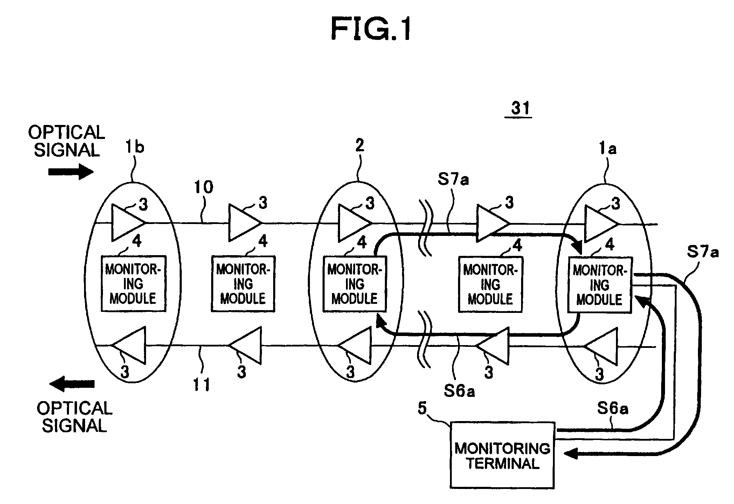

Figure 1 is a view of the configuration of a conventional optical communication system 31.

As shown in Fig. 1, the optical communication system 31 has an optical transmission line 10 for transmitting an optical signal rightward in the figure and an optical transmission line 11 for transmitting an optical signal leftward in the figure and therefore can transmit an optical signal in two directions.

As the optical transmission lines 10 and 11, use is made of for example optical fibers.

End terminals 1a and 1b and one or more repeaters including a repeater 2 are provided at predetermined positions on the optical transmission lines 10 and 11.

Each of the end terminals 1a and 1b and the repeater 2 has an optical amplifier 3 on the optical transmission line 10, an optical amplifier 3 on the optical transmission line 11, and a monitoring module 4 for monitoring the operating state in each device.

Note that the end terminals 1a and 1b include for example a not illustrated optical transmitter or optical receiver or a multiplexer for multiplexing a plurality of optical signals and form a start end and a terminal end of the optical transmission lines 10 and 11.

Each monitoring module 4 monitors a temperature and amplification rate of the optical amplifier 3 in the device, a state of a laser excitation light source, an input level and an output level of the optical amplifier 3, its own operating state, etc.

When receiving a monitoring result request signal S6a directed to itself from a monitoring terminal 5, the monitoring module 4 transmits a monitoring result response signal S7a indicating the monitoring result to the monitoring terminal 5.

In the example shown in Fig. 1, the monitoring result request signal S6a is transmitted from the monitoring terminal 5 to the end terminal 1a and then transmitted to the monitoring module 4 in the repeater 2 via the optical transmission line 11 from the monitoring module 4 in the end terminal 1a.

Further, the monitoring result response signal S7a is transmitted from the monitoring module 4 of the repeater 2 via the optical transmission line 10 to the monitoring module 4 of the end terminal 1a and then transmitted to the monitoring terminal 5.

At this time, the monitoring result request signal S6a and the monitoring result response signal S7a are sent multiplexed in wavelength on the original main optical signal sent through the optical transmission lines 10 and 11.

Conventionally, the transmission route of the monitoring result request signal S6a from the monitoring terminal 5 to the repeater 2 and the transmission route of the monitoring result response signal S7a from the repeater 2 to the monitoring terminal 5 are determined in advance in a fixed manner.

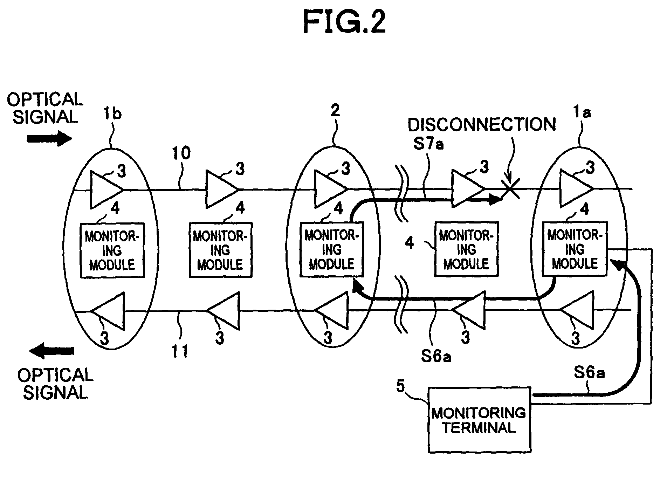

In the conventional optical communication system 31 mentioned above, however, for example, as shown in Fig. 2, where a disconnection occurs between the repeater 2 and the end terminal 1a on the optical transmission line 10, the monitoring result response signal S7a cannot be transmitted from the repeater 2 to the monitoring terminal 5.

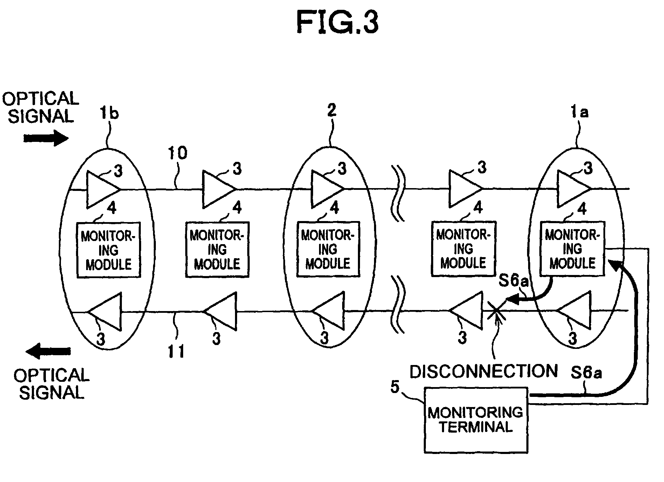

Further, for example, as shown in Fig. 3, where a disconnection occurs between the end terminal 1a and the repeater 2 on the optical transmission line 11, the monitoring result request signal S6a cannot be transmitted from the monitoring terminal 5 to the repeater 2.

As a result, in a case as shown in Fig. 2 and Fig. 3, there is a problem in that the monitoring terminal 5 cannot acquire the monitoring result of the monitoring module 4 of the repeater 2.

### DISCLOSURE OF THE INVENTION

The present invention was made in consideration with the above problem of the related art and has as an object thereof to provide a communication system and method capable of more reliably collecting monitoring results of monitoring modules of end terminals and repeaters by monitoring terminals and a communication apparatus using the same.

In order to solve the problem of the related art and achieve the above object, a communication system of the present invention comprises a processing means provided on a transmission line, performing a predetermined processing using a signal transmitted over the transmission line, monitoring a state of the related processing, and transmitting a monitoring result response signal indicating the result of the monitoring via the transmission line in response to a monitoring result request signal received via the transmission line, and a monitoring result collecting means for transmitting the monitoring result request signal to the processing means via the transmission line and receiving the monitoring result response signal from the processing means, wherein the monitoring result collecting means changes at least one of a transmission route of the monitoring result request signal to the processing means and a reception route of the monitoring result request signal from the processing means where it does not receive the monitoring result response signal after an elapse of a predetermined time after transmitting the monitoring result request signal and performs the transmission and reception of the monitoring result request signal and the monitoring result response signal by using the route after the related change.

That is, in the communication system of the present invention, the processing means provided on the transmission line performs the predetermined processing using the signal transmitted over the transmission line and, at the same time, monitors the state of the related processing.

Then, the monitoring result request signal is transmitted via the transmission line from the monitoring result collecting means to the processing means, and the monitoring result response signal is transmitted from the processing means to the monitoring result collecting means in response to that.

The monitoring result collecting means changes at least one of the transmission route of the monitoring result request signal to the processing means and the reception route of the monitoring result request signal from the processing means when it does not receive the monitoring result response signal after an elapse of a predetermined time after transmitting the monitoring result request signal and performs the transmission and reception of the monitoring result request signal and the monitoring result response signal by using the route after the related change.

Due to this, even in a case where a disconnection occurs on the transmission line, by changing the transmission and/or reception route of the monitoring result request signal and the monitoring result response signal, the transmission and reception of the monitoring result request signal and the monitoring result response signal become possible between the monitoring result collecting means and the processing means via a route bypassing the disconnected portion.

Further, in the communication system of the present invention, preferably the monitoring result collecting means transmits the monitoring result request signal containing information indicating the reception route of the monitoring result response signal to the processing means, and the processing means transmits the monitoring result response signal to the monitoring result collecting means via the reception route based on the received monitoring result request signal.

Alternatively, in the communication system of the present invention, preferably the monitoring result collecting means transmits the monitoring result request signal to the processing means by a plurality of different transmission routes without waiting for a decision of reception of the monitoring result response signal.

Alternatively, in the communication system of the present invention, preferably the processing means transmits the monitoring result response signal to the monitoring result collecting means by a plurality of different reception routes in response to the received monitoring result request signal.

Alternatively, in the communication system of the present invention, preferably the monitoring result collecting means stores useable routes among routes of the transmission line for transmitting and receiving the monitoring result request signal and the monitoring result response signal in advance, selects one route among the related stored useable routes, and performs the transmission and reception of the monitoring result request signal and the monitoring result response signal by using the related selected route.

More preferably, in the communication system of the present invention, the monitoring result collecting means deletes a related selected route from the stored useable routes when it does not receive the monitoring result response signal after the elapse of a predetermined time after transmitting the monitoring result request signal by using the selected route and then selects a route and performs the transmission and reception of the monitoring result request signal and the monitoring result response signal by using the newly selected route.

Alternatively, in the communication system of the present invention, preferably the processing means monitors at least one among a temperature and an amplification rate of an amplifier, a state of a laser excitation source, an input level and an output level of the amplifier, and the state of a monitoring operation as the state of the processing.

Further, a communication apparatus of the present invention is a communication apparatus for performing a predetermined processing using a signal transmitted over a transmission line, transmitting a monitoring result request signal to a processor for monitoring the state of the related processing via the transmission line, and receiving a monitoring result response signal from the processor via the transmission line, wherein, when the monitoring result response signal is not received after an elapse of a predetermined time from the transmission of the monitoring result request signal, at least one of a transmission route of the monitoring result request signal to the processor and a reception route of the monitoring result response signal from the processor is changed, and the transmission and reception of the monitoring result request signal and the monitoring result response signal are carried out by using the route after the related change.

Further, the communication apparatus of the present invention preferably transmits the monitoring result request signal containing information indicating the reception route of the monitoring result response signal to the processor and receives the monitoring result response signal from the processor via the reception route.

Alternatively, the communication apparatus of the present invention preferably transmits the monitoring result request signal to the processing means by a plurality of different transmission routes without waiting for a decision of reception of the monitoring result response signal.

Alternatively, the communication apparatus of the present invention preferably stores in advance useable routes among routes of the transmission line for transmitting and receiving the monitoring result request signal and the monitoring result response signal, selects one route among the related stored useable routes, and performs the transmission and reception of the monitoring result request signal and the monitoring result response signal by using the related selected route.

Further, the communication method of the present invention comprises the steps of performing predetermined processing using a signal transmitted a transmission line, transmitting a monitoring result request signal to a processor for monitoring a state of the related processing via the transmission line, changing at least one of a transmission route of the monitoring result request signal to the processor and a reception route of the monitoring result response signal from the processor when the monitoring result response signal is not received after an elapse of a predetermined time from the transmission of the monitoring result request signal, and performing the transmission and reception of the monitoring result request signal and the monitoring result response signal by using the route after the related change.

### BRIEF DESCRIPTION OF THE DRAWINGS

Figure 1 is a view of the configuration of a conventional optical communication system.
Figure 2 is a view for explaining a problem of the conventional optical communication system shown in Fig. 1.
Figure 3 is a view for explaining a problem of the conventional optical communication system shown in Fig. 1.
Figure 4 is a view of the configuration of an optical communication system according to a first embodiment of the present invention.
Figure 5A is a view of a partial configuration of a repeater shown in Fig. 4.
Figure 5B is a view for explaining an example of the operation of the repeater shown in Fig. 5A.
Figure 6A is a view for explaining an example of the operation of the repeater shown in Fig. 5A.
Figure 6B is a view for explaining an example of the operation of the repeater shown in Fig. 5A.
Figure 7 is a flowchart for explaining the operation of a monitoring terminal shown in Fig. 4.
Figure 8 is a view for explaining a second operation mode of the optical communication system shown in Fig. 4.
Figure 9 is a view for explaining a third operation mode of the optical communication system shown in Fig. 4.
Figure 10 is a view for explaining a fourth operation mode of the optical communication system shown in Fig. 4.
Figure 11 is a view of the configuration of an optical communication system according to a second embodiment of the present invention.
Figure 12 is a view of the configuration of an optical communication system according to a third embodiment of the present invention.
Figure 13 is a view of the configuration of an optical communication system according to a fourth embodiment of the present invention.
Figure 14 is a view of the configuration of an optical communication system according to a fifth embodiment of the present invention.
Figure 15 is a flowchart of the processing of a monitoring terminal when communicating with a repeater shown in Fig. 14.

### BEST MODE FOR CARRYING OUT THE INVENTION

Below, an explanation will be made of an optical communication system by examples of communication systems according to embodiments of the present invention.

### First Embodiment

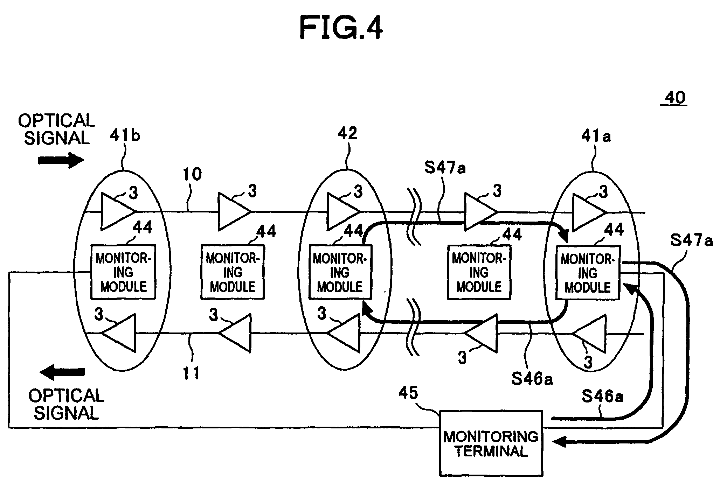

Figure 4 is a view of the configuration of an optical communication system 40 of the present embodiment.

As shown in Fig. 4, an optical communication system 40 has an optical transmission line 10 for transmitting an optical signal rightward in Fig. 4 and an optical transmission line 11 for transmitting an optical signal leftward in Fig. 4 and therefore can transmit an optical signal in two directions.

As the optical transmission lines 10 and 11, use is made of for example optical fibers.

End terminals 41a and 41b and one or more repeaters including a repeater 42 are provided at predetermined positions of the optical transmission lines 10 and 11.

### [Repeater 42]

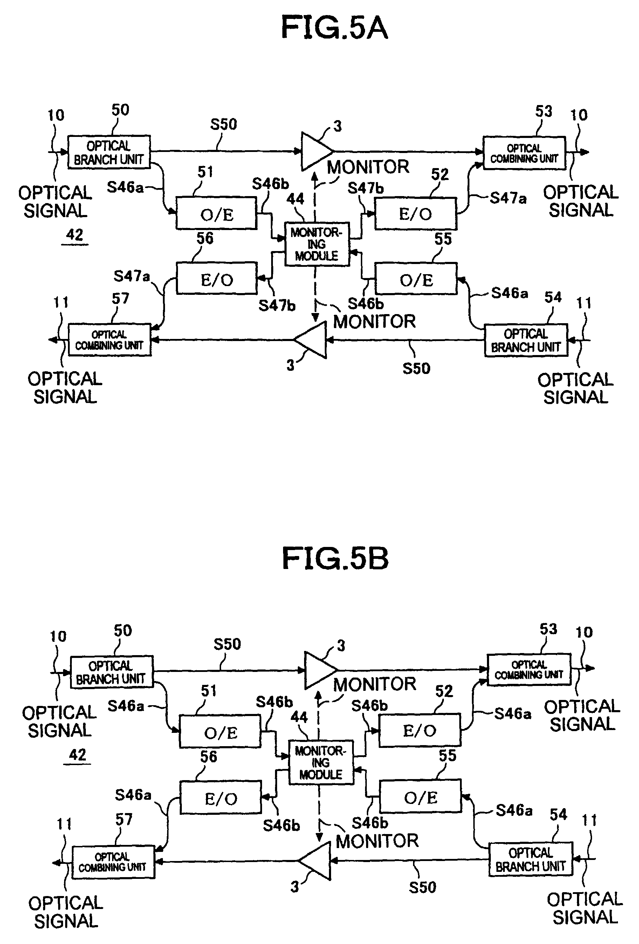

Each of the repeaters 42 has, as shown in Fig. 5A, an optical amplifier 3 on the optical transmission line 10, an optical amplifier 3 on the optical transmission line 11, a monitoring module 44, an optical branch unit 50, an O/E converter 51, an E/O converter 52, an optical combining unit 53, an optical branch unit 54, an O/E converter 55, an E/O converter 56, and an optical combining unit 57.

The optical branch unit 50 receives as input a wavelength multiplexed optical signal transmitted via the optical transmission line 10, splits from it a monitoring result request signal S46a having a predetermined wavelength contained in the related optical signal and outputs it to the O/E converter 51, and outputs a main optical signal S50 other than this to the optical amplifier 3. The main optical signal S50 is amplified with a predetermined optical amplification rate at the optical amplifier 3 and then output to the optical combining unit 53.

The O/E converter 51 converts the monitoring result request signal S46a from the optical signal to an electrical signal to generate a monitoring result request signal S46b and outputs the monitoring result request signal S46b to the monitoring module 44.

The E/O converter 52 converts a monitoring result response signal S47b from the monitoring module 44 from an electrical signal to an optical signal to generate a monitoring result response signal S47a and outputs the monitoring result response signal S47a to the optical combining unit 53.

The optical combining unit 53 combines the main optical signal S50 from the optical amplifier 3 and the monitoring result response signal S47a from the E/O converter 52 to generate the optical signal and outputs the related generated optical signal to the optical transmission line 10.

The optical branch unit 54 receives as input a wavelength multiplexed optical signal transmitted via the optical transmission line 11, splits off a monitoring result request signal S46a having a predetermined wavelength contained in the related optical signal and outputs it to the O/E converter 55, and outputs the main optical signal S50 other than this to the optical amplifier 3. The main optical signal S50 is amplified with the predetermined optical amplification rate at the optical amplifier 3 and then output to the optical combining unit 57.

The O/E converter 55 converts the monitoring result request signal S46a from the optical signal to an electrical signal to generate the monitoring result request signal S46b and outputs the monitoring result request signal S46b to the monitoring module 44.

The E/O converter 56 converts the monitoring result response signal S47b from the monitoring module 44 from an electrical signal to an optical signal to generate the monitoring result response signal S47a and outputs the monitoring result response signal S47a to the optical combining unit 57.

The optical combining unit 57 combines (wavelength multiplexes) the main optical signal S50 from the optical amplifier 3 and the monitoring result response signal S47a from the E/O converter 56 to generate an optical signal and outputs the related generated optical signal to the optical transmission line 11.

The monitoring module 44 monitors the temperature and the amplification rate of the optical amplifiers 3 and 3 in the same repeater 42, the state of the laser excitation light source of the amplifiers 3 and 3, the input level and the output level of the optical amplifiers 3 and 3, its own operating state, etc.

When a monitoring result request signal S46b is input from an O/E converter 51 or 55, the monitoring module 44 views a destination address contained in the monitoring result request signal S46b and, when the related destination address points to itself, outputs a monitoring result response signal S47b indicating the monitoring result to the E/O converter 52 or 56.

At this time, based on the reception route information contained in the monitoring result request signal S46b, the monitoring module 44 outputs the monitoring result response signal S47b to the E/O converter 52 when the related reception route information indicates the optical transmission line 10, while outputs the monitoring result response signal 47b to the E/O converter 56 when the related reception route information indicates the optical transmission line 11.

Note that, for designation of the reception route of the monitoring result response signal S47b in the monitoring result request signal S46b, for example, predetermined flag bits are allocated in advance to a plurality of reception routes. Designation is indicated when the related flag bit has a logic value "1", while designation is not indicated by a logic value "0".

Further, the monitoring module 44 outputs the related input monitoring result request signal S46b as it is to the E/O converter 52 or 56 in Fig. 5B when the destination address contained in the monitoring result request signal S46b does not point to itself. Concretely, the monitoring module 44 outputs the monitoring result request signal S46b to the E/O converter 52 when the monitoring result request signal S46b is input from the O/E converter 51, while outputs the monitoring result request signal S46b to the E/O converter 56 when the monitoring result request signal S46b is input from the O/E converter 55. The E/O converter 52 or 56 converts the monitoring result request signal S46b from the monitoring module 44 from an electrical signal to an optical signal and outputs the monitoring result request signal S46a to the optical combining unit 52 or 57.

### [End Terminal 41a]

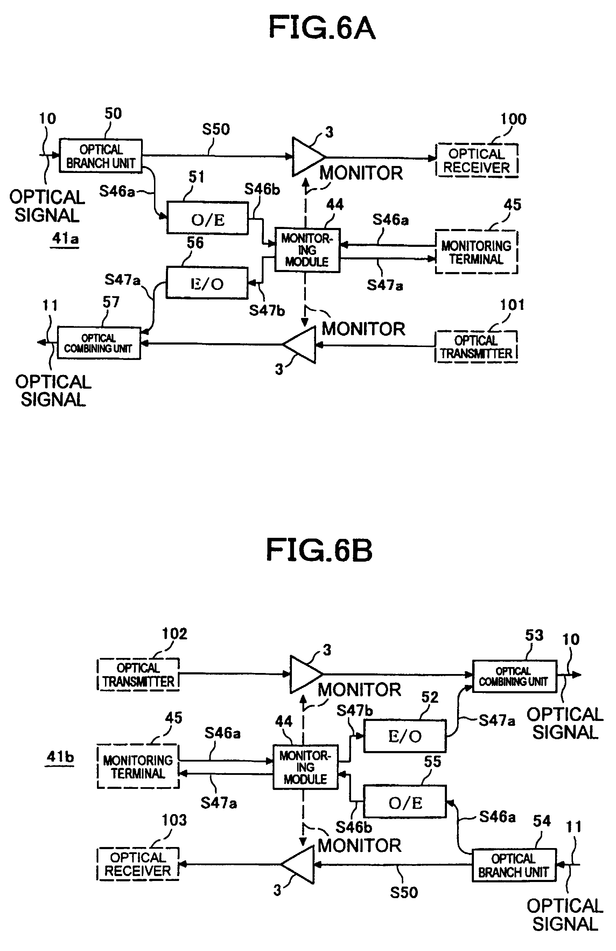

The end terminal 41a is configured, for example, as shown in Fig. 6A, by eliminating the E/O converter 52, optical combining unit 53, optical branch unit 54, and O/E converter 55 from the configuration shown in Fig. 5A and by providing electrical line for transmitting and receiving the monitoring result request signal S46a and the monitoring result response signal S47a between the monitoring module 44 and the monitoring terminal 45.

In the end terminal 41a, the optical amplifier 3 on the optical transmission line 10 outputs the optically amplified optical signal to an optical receiver 100. The optical amplifier 3 on the optical transmission line 11 optically amplifies the optical signal input from an optical transmitter 101.

### [End Terminal 41b]

The end terminal 41b is configured by, for example, as shown in Fig. 6B, eliminating the optical branch unit 50, O/E converter 51, E/O converter 56, and optical combining unit 57 from the configuration shown in Fig. 5A and by providing electrical line for transmitting and receiving the monitoring result request signal S46a and the monitoring result response signal S47a between the monitoring module 44 and the monitoring terminal 45.

In the end terminal 41b, the optical amplifier 3 on the optical transmission line 10 receives as input and amplifies the optical signal from an optical transmitter 102. Also, the optical amplifier 3 on the optical transmission line 11 outputs the optically amplified optical signal to an optical receiver 103.

### [Monitoring Terminal 45]

The monitoring terminal 45 comprehensively monitors and manages the optical communication system 40 as a whole based on, as shown in Fig. 4, the monitoring results in the monitoring modules 44 of the end terminals 41a and 41b and the plurality of repeaters including the repeater 42.

The monitoring terminal 45 transmits the monitoring result request signal S46a containing the destination address of the monitoring module 44 and a reception route information indicating the reception route of the monitoring result response signal S47a to part or all of the monitoring modules 44 in the optical communication system 40, receives the monitoring result response signal S47a in response to that by the reception route, and stores the related received monitoring result response signal S47a in a not illustrated memory.

Below, an explanation will be made of the processing of the monitoring terminal 45 using as an example a case where the monitoring terminal 45 acquires the monitoring results from the monitoring module 44 of the repeater 42.

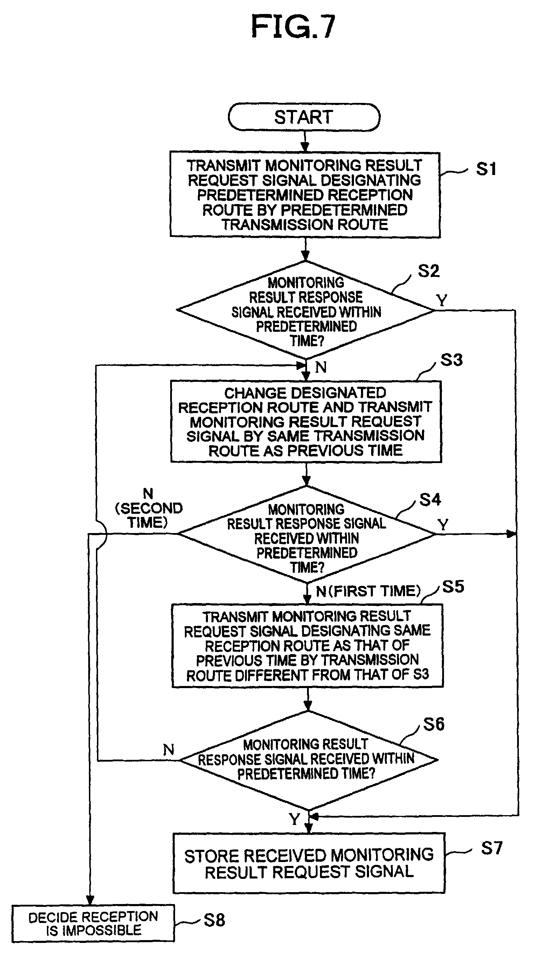

Figure 7 is a flowchart of the processing of the monitoring terminal 45.

Step S1: The monitoring terminal 45 outputs for example a monitoring result request signal S46a containing reception route information designating the optical transmission line 10 as the reception route of the monitoring result response signal S47a and a destination address comprised by the address of the repeater 42 to the optical transmission line 11 via the end terminal 41a.

Step S2: The monitoring terminal 45 decides whether or not the monitoring result request signal S46b from the repeater 42 has been received within a predetermined time, executes the processing of step S7 when it has been received, while executes the processing of step S3 when it has not been received.

Step S3: The monitoring terminal 45 outputs the monitoring result request signal S46a changed in designated reception route from the optical transmission line 10 to the optical transmission line 11 via the end terminal 41a to the optical transmission line 11 in the same way as the previous time.

Step S4: The monitoring terminal 45 decides whether or not the monitoring result request signal S46b from the repeater 42 has been received within a predetermined time, executes the processing of step S7 when it has been received, while executes the processing of step S5 when it has not been received.

Note that, when executing step S4 a second time in a series of processings of transmitting the monitoring result request signal S46a to the repeater 42, if the monitoring result request signal S46b from the repeater 42 is not received within the predetermined time, the monitoring terminal 45 decides that the reception of the monitoring result response signal S47a is impossible and terminates the processing (step S8).

Step S5: The monitoring terminal 45 outputs the monitoring result request signal S46a designating the optical transmission line 10 the same as the previous time as the reception route to the optical transmission line 10 via the end terminal 41b unlike the previous time.

Step S6: The monitoring terminal 45 decides whether or not the monitoring result request signal S46b from the repeater 42 has been received within a predetermined time, executes the processing of step S7 when it has been received, while returns to step S3 when it has not been received.

Step S7: The monitoring terminal 45 stores the received monitoring result response signal S47a in the memory.

When these steps S7 and S8 end, the monitoring terminal 45 repeats the processings from step S1 after the elapse of a predetermined time.

Below, an explanation will be made of the operation modes of the optical communication system 40 shown in Fig. 4.

In the present embodiment, the operation modes of the optical communication system 40 will be explained using as an example a case where the monitoring terminal 45 acquires the monitoring results from the monitoring module 44 of the repeater 42.

### [First Operation Mode]

In the present operation mode, as shown in Fig. 4, an explanation will be given of a case where there is no disconnection in the optical transmission lines 10 and 11.

The monitoring result request signal S46a containing the reception route information designating the optical transmission line 10 as the reception route of the monitoring result response signal S47a and the destination address comprised by the address of the repeater 42 is transmitted from the monitoring terminal 45 to the repeater 42 via the optical transmission line 11 (step S1 shown in Fig. 7).

Then, the monitoring result response signal S47a indicating the monitoring result of the repeater 42 is transmitted via the optical transmission line 10 from the repeater 42 receiving this to the monitoring terminal 45 (step S2 shown in Fig. 7).

Then, the monitoring result response signal S47a is stored in the memory in the monitoring terminal 45 (step S7 shown in Fig. 7).

### [Second Operation Mode]

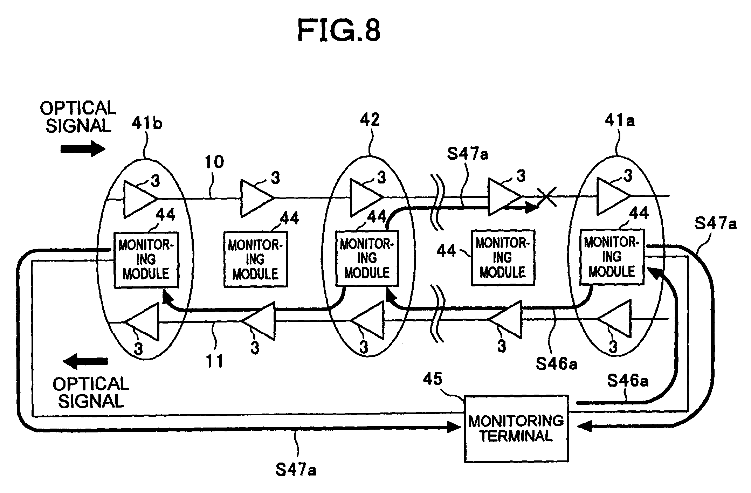

In the present operation mode, as shown in Fig. 8, an explanation will be given of a case where there is a disconnection in the optical transmission line 10 between the repeater 42 and the end terminal 41a.

The monitoring result request signal S46a containing the reception route information designating the optical transmission line 10 as the reception route of the monitoring result response signal S47a and the destination address comprised by the address of the repeater 42 is transmitted from the monitoring terminal 45 to the repeater 42 via the optical transmission line 11 (step S1 shown in Fig. 7).

Then, the monitoring result response signal S47a is output from the repeater 42 receiving this to the optical transmission line 10, but since there is a disconnection, the monitoring result response signal S47a is not received at the monitoring terminal 45.

Next, after an elapse of a predetermined time, the monitoring result request signal S46a designating the optical transmission line 11 as the reception route is transmitted from the monitoring terminal 45 to the repeater 42 via the optical transmission line 11 (steps S2, S3 shown in Fig. 7).

Then, the monitoring result response signal S47a indicating the monitoring result of the repeater 42 is transmitted from the repeater 42 to the monitoring terminal 45 via the optical transmission line 11.

At this time, since there is no disconnection in the optical transmission line 11 between the repeater 42 and the end terminal 41b, the monitoring result response signal S47a is received by the monitoring terminal 45.

Then, the monitoring result response signal S47a is stored in the memory in the monitoring terminal 45 (step S7 shown in Fig. 7).

### [Third Operation Mode]

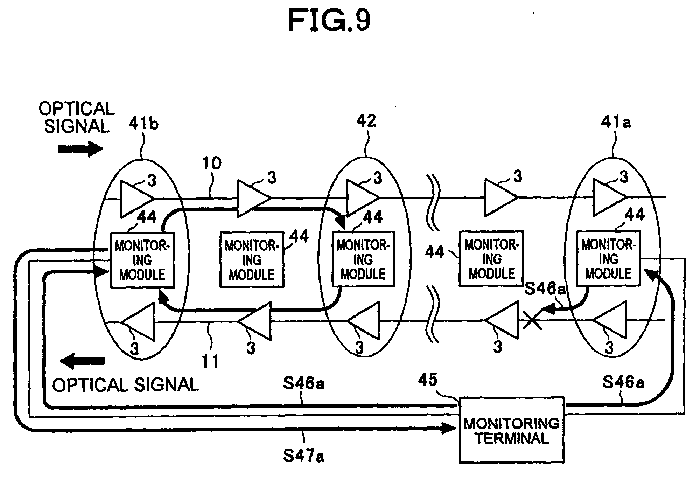

In the present operation mode, as shown in Fig. 9, an explanation will be given of a case where there is a disconnection in the optical transmission line 11 between the repeater 42 and the end terminal 41a.

The monitoring result request signal S46a containing the reception route information designating the optical transmission line 10 as the reception route of the monitoring result response signal S47a and the destination address comprised by the address of the repeater 42 is transmitted from the monitoring terminal 45 to the repeater 42 via the optical transmission line 11 (step S1 shown in Fig. 7), but the monitoring result request signal S46a is not received by the repeater 42 due to the disconnection. Accordingly, the monitoring result response signal S47a is not transmitted from the repeater 42 to the monitoring terminal 45.

Next, after the elapse of a predetermined time, the monitoring result request signal S46a designating the optical transmission line 11 as the reception route is transmitted from the monitoring terminal 45 to the repeater 42 via the optical transmission line 11 (steps S2, S3 shown in Fig. 7), but similarly the monitoring result request signal S46a is not received by the repeater 42 due to the disconnection. Accordingly, the monitoring result response signal S47a is not transmitted from the repeater 42 to the monitoring terminal 45.

Next, after the elapse of a predetermined time, the monitoring result request signal S46a changed in the transmission route from the optical transmission line 11 to the optical transmission line 10 and designating the optical transmission line 11 as the reception route is transmitted from the monitoring terminal 45 to the repeater 42 (steps S4, S5 shown in Fig. 7).

Then, the monitoring result response signal S47a indicating the monitoring result of the repeater 42 is transmitted from the repeater 42 to the monitoring terminal 45 via the optical transmission line 11.

At this time, since there is no disconnection in the optical transmission line 10 between the repeater 42 and the end terminal 41b, the monitoring result request signal S46a is received by the monitoring module 44. Further, since there is no disconnection in the optical transmission line 11 between the repeater 42 and the end terminal 41b, the monitoring result response signal S47a is received by the monitoring terminal 45.

Then, the monitoring result response signal S47a is stored in the memory in the monitoring terminal 45 (step S7 shown in Fig. 7).

### [Fourth Operation Mode]

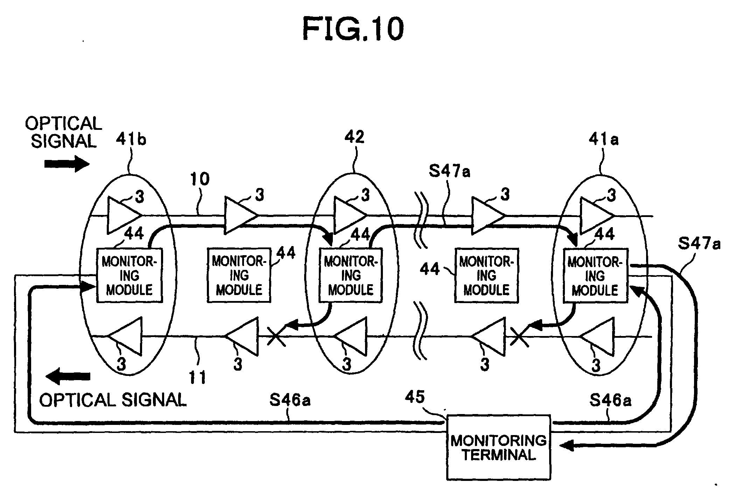

In the present operation mode, as shown in Fig. 10, an explanation will be given of a case where there is a disconnection in the optical transmission line 11 between the repeater 42 and the end terminal 41a and in the optical transmission line 11 between the end terminal 41b and the repeater 42.

The monitoring result request signal S46a containing the reception route information designating the optical transmission line 10 as the reception route of the monitoring result response signal S47a and the destination address comprised by the address of the repeater 42 is transmitted via the optical transmission line 11 from the monitoring terminal 45 to the repeater 42 (step S1 shown in Fig. 7), but the monitoring result request signal S46a is not received by the repeater 42 due to the disconnection. Accordingly, the monitoring result response signal S47a is not transmitted from the repeater 42 to the monitoring terminal 45.

Next, after the elapse of a predetermined time, the monitoring result request signal S46a changed in the reception route to the optical transmission line 11 is transmitted via the optical transmission line 11 from the monitoring terminal 45 to the repeater 42 (steps S2, S3 shown in Fig. 7), but similarly, due to the disconnection, the monitoring result request signal S46a is not received by the repeater 42. Accordingly, the monitoring result response signal S47a is not transmitted from the repeater 42 to the monitoring terminal 45.

Next, after the elapse of a predetermined time, the monitoring result request signal S46a changed in the transmission route from the optical transmission line 11 to the optical transmission line 10 and designating the optical transmission line 11 as the reception route is transmitted from the monitoring terminal 45 to the repeater 42 (steps S4, S5 shown in Fig. 7).

Then, the monitoring result response signal S47a indicating the monitoring result of the repeater 42 is output from the repeater 42 to the optical transmission line 11, but due to the disconnection, the monitoring result request signal S46a is not received by the monitoring terminal 45.

Next, after the elapse of a predetermined time, the monitoring result request signal S46a changed in reception route to the optical transmission line 10 again is transmitted from the monitoring terminal 45 to the repeater 42 via the optical transmission line 10 (steps S6, S3 shown in Fig. 7).

Then, the monitoring result response signal S47a indicating the monitoring result of the repeater 42 is transmitted from the repeater 42 to the monitoring terminal 45 via the optical transmission line 10.

Then, the monitoring result response signal S47a is stored in the memory in the monitoring terminal 45 (step S7 shown in Fig. 7).

As explained above, in the optical communication system 40, when the monitoring terminal 45 does not receive the monitoring result response signal S47a after the elapse of a predetermined time after transmitting the monitoring result request signal S46a, it changes at least one of the transmission route of the monitoring result request signal S46a and the reception route of the monitoring result response signal S47a by the procedures shown in Fig. 7 and transmits the monitoring result request signal S46a again. Therefore even in the case where there is a disconnection in the optical transmission lines 10 and 11 as shown in Fig. 8 to Fig. 10, the monitoring terminal 45 can receive the monitoring result response signal S47a from the monitoring module 44 of the repeater 42.

For this reason, according to the optical communication system 40, the monitoring results of the monitoring modules 44 of the end terminals 41a and 41b and a plurality of repeaters including the repeater 42 can be more reliably collected by the monitoring terminal 45.

As a result, according to the optical communication system 40, the end terminals 41a and 41b and the repeaters can be suitably monitored.

Further, according to the optical communication system 40, by designating the reception route of the monitoring result response signal S47a in the monitoring result request signal S46a, the transmission of the request and the reception of the response of the monitoring results can be carried out by flexible route selection by the decision of the monitoring terminal 45. Note that, in the present embodiment, both of the optical transmission lines 10 and 11 may be simultaneously designated as the reception route.

This embodiment corresponds to claim 1 or claim 2. A plurality of transmission lines can be used. By enabling transmission and reception of the monitoring result request signal and the monitoring result response signal by using another optical transmission line when transmission becomes abnormal, it becomes possible for the monitoring result collecting means to reliably collect the control and monitoring information even when disconnection or other failure occurs. In addition, in claim 2, the reception route can be designated in advance by deciding it from the information provided in the monitoring result collecting means, whereby it becomes possible to more reliably collect the information.

### Second Embodiment

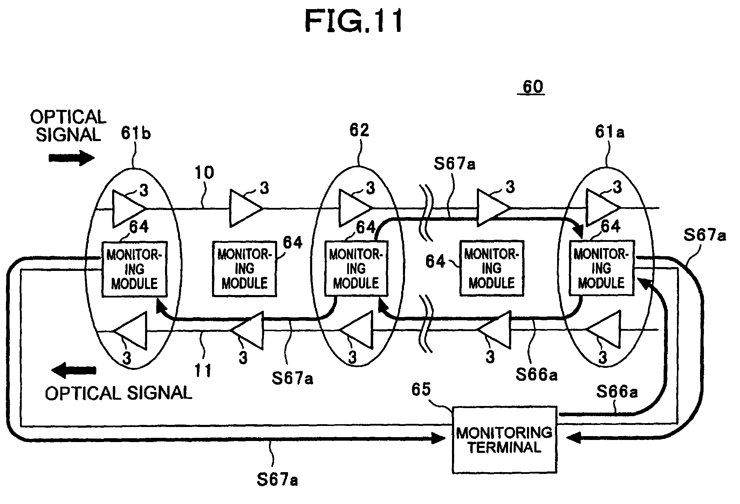

Figure 11 is a view of the configuration of an optical communication system 60 according to the present embodiment.

As shown in Fig. 11, the optical communication system 60 has the same configuration as the optical communication system 40 shown in Fig. 4 mentioned above, but is different in operation.

Note that, in Fig. 11, different reference numerals from those in Fig. 4 are assigned to monitoring modules 64, a monitoring terminal 65, end terminals 61a and 61b, and a repeater 62 as they perform different operations from those of the case of the optical communication system 40 shown in Fig. 4.

Below, an explanation will be given focusing on the monitoring modules 64 and the monitoring terminal 65.

The monitoring terminal 65 transmits a monitoring result request signal S66a containing the address of the device to acquire the monitoring result therefrom as the destination address to all or part of the monitoring modules 64 in the optical communication system 60 in the same way as the case of the first embodiment.

The monitoring module 64 converts the monitoring result request signal S66a to an electrical signal in the O/E converter 51 or 55 shown in Fig. 5A and views the destination address contained in the related electrical signal. When the related destination address points to itself, it outputs a monitoring result response signal indicating the monitoring result to both of the E/O converters 52 and 56. By this, a monitoring result response signal S67a is transmitted via the optical transmission lines 10 and 11 to the monitoring terminal 65 as shown in Fig. 11. The monitoring terminal 65 receives the monitoring result response signal S67a and stores the related received monitoring result response signal S67a in a not illustrated memory. Note that, in the monitoring module 64, in order to output the monitoring result response signal to both of the E/O converters 52 and 56, it is also possible to designate both of the optical transmission lines 10 and 11 as the reception route information in the monitoring result request signal S66a or it is also possible to set the system in advance so that the monitoring module 64 operates in this way before the transmission of the monitoring result request signal S66a.

In this way, in the optical communication system 60, the end terminals 61a and 61b and a plurality of repeaters including the repeater 62 constantly transmit the monitoring result response signal S67a to the monitoring terminal 65 by using two systems of optical transmission lines 10 and 11 when receiving the monitoring result request signal S66a.

Accordingly, according to the optical communication system 60, in Fig. 11, for example, even in the case where there is a disconnection in one of the optical transmission line 10 between the end terminal 61a and the repeater 62 and the optical transmission line 11 between the end terminal 61b and the repeater 62, the monitoring result response signal S67a can be transmitted from the repeater 62 to the monitoring terminal 65.

Further, according to the optical communication system 60, the monitoring terminal 65 does not have to transmit the monitoring result request signal S66a changed in designated reception route again after the elapse of a predetermined time as in the first embodiment mentioned before, therefore when there is a disconnection in one of the reception routes, the time of from when the monitoring terminal 65 transmits the monitoring result request signal S66a to when it receives the monitoring result response signal S67a can be shortened.

This embodiment corresponds to claim 4. By eliminating the need for changing the reception route and transmitting the monitoring result request signal again even if trouble occurs in the reception route, it becomes possible to shorten the time by the amount of the retransmission at the occurrence of a disconnection or other trouble.

Further, according to the optical communication system 60, the processing of the monitoring module 64 and the monitoring terminal 65 can be simplified in comparison with the monitoring module 44 and the monitoring terminal 45 in the first embodiment.

### Third Embodiment

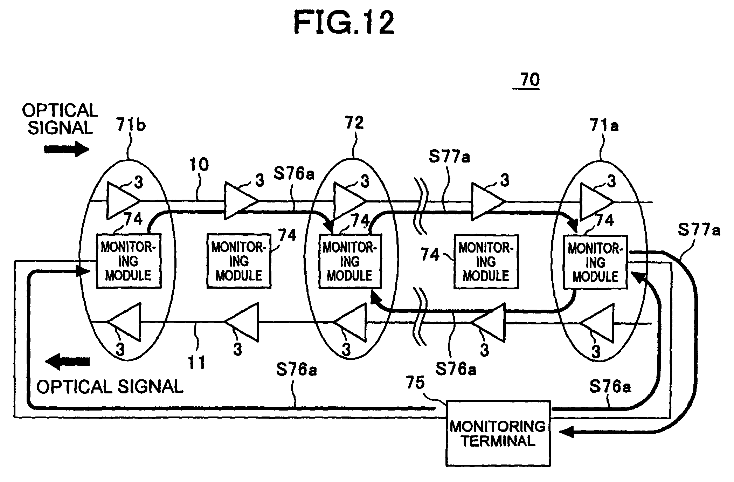

Figure 12 is a view of the configuration of an optical communication system 70 of the present embodiment.

As shown in Fig. 12, the optical communication system 70 has the same configuration as the optical communication system 40 shown in Fig. 4, but is different in operation.

Note that, in Fig. 12, different reference numerals from those in Fig. 4 are assigned to monitoring modules 74, a monitoring terminal 75, end terminals 71a and 71b, and a repeater 72 as they perform different operations from those of the case of the optical communication system 40 shown in Fig. 4.

Below, an explanation will be given focusing on the monitoring modules 74 and the monitoring terminal 75.

The monitoring terminal 75 transmits a monitoring result request signal S76a containing the address of the device to acquire the monitoring result therefrom as the destination address and designating the optical transmission line 10 as the reception route to the end terminals 71a and 71b for example substantially simultaneously to part or all of the monitoring modules 74 in the optical communication system 70.

The monitoring module 74 converts the monitoring result request signal S76a to an electrical signal in the O/E converters 51 and 55 shown in Fig. 5A, and views the destination address contained in the related electrical signal. Where the related destination address points to itself, it outputs a monitoring result response signal indicating the monitoring result to the E/O converter 52. By this, a monitoring result response signal S77a is transmitted to the monitoring terminal 75 via the optical transmission line 10 as shown in Fig. 12. The monitoring terminal 75 receives the monitoring result response signal S77a and stores the related received monitoring result response signal S77a in a not illustrated memory.

In this way, in the optical communication system 70, the monitoring terminal 75 substantially simultaneously transmits the monitoring result request signal S76a to the end terminals 71a and 71b. Namely, the monitoring terminal 75 outputs the monitoring result request signal S76a to two systems from the start without waiting for the decision of the reception of the monitoring result response signal from the monitoring module 74 as in the first embodiment.

Accordingly, according to the optical communication system 70, in Fig. 12, for example, even when there is a disconnection in one of the optical transmission line 11 between the end terminal 71a and the repeater 72 and the optical transmission line 10 between the end terminal 71b and the repeater 72, the monitoring result request signal S76a can be transmitted from the monitoring terminal 75 to the repeater 72.

Further, according to the optical communication system 70, the monitoring terminal 75 does not have change the transmission route and transmit the monitoring result request signal again after the elapse of a predetermined time as in the first embodiment, therefore when there is a disconnection in one of the transmission routes, the time of from when the monitoring terminal 75 transmits the monitoring result request signal S76a to when it receives the monitoring result response signal S77a can be shortened.

This embodiment corresponds to claim 3. By eliminating the need for changing the reception route and transmitting the monitoring result request signal again even if trouble occurs in the reception route, it becomes possible to shorten the time by the amount of the retransmission at the time of occurrence of disconnection or other trouble.

Further, according to the optical communication system 70, the processing of the monitoring module 74 and the monitoring terminal 75 can be simplified in comparison with the monitoring module 44 and the monitoring terminal 45 in the first embodiment.

### Fourth Embodiment

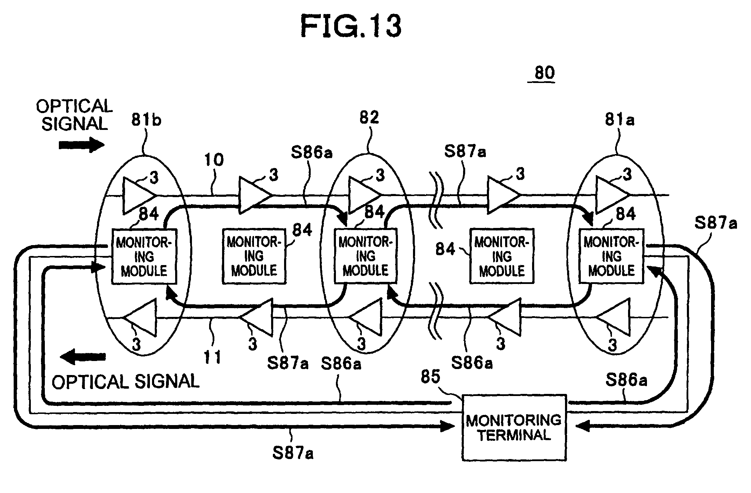

Figure 13 is a view of the configuration of an optical communication system 80 of the present embodiment.

As shown in Fig. 13, the optical communication system 80 has the same configuration as the optical communication system 40 shown in Fig. 4, but is different in operation.

Note that, in Fig. 13, different reference numerals from those in Fig. 4 are assigned to monitoring modules 84, a monitoring terminal 85, end terminals 81a and 81b, and a repeater 82 as they perform different operations from those of the case of the optical communication system 40 shown in Fig. 4.

Below, an explanation will be giving focusing on the monitoring modules 84 and the monitoring terminal 85.

The monitoring terminal 85 transmits a monitoring result request signal S86a containing the address of the device to acquire the monitoring result therefrom as the destination address to the end terminals 81a and 81b for example substantially simultaneously to part or all of the monitoring modules 84 in the optical communication system 80

The monitoring module 84 converts the monitoring result request signal S86a to an electrical signal in the O/E converters 51 and 55 shown in Fig. 5A and views the destination address contained in the related electrical signal. When the related destination address points to itself, it outputs the monitoring result response signal indicating the monitoring result to the E/O converters 52 and 56. By this, a monitoring result response signal S87a is transmitted to the monitoring terminal 85 via the optical transmission lines 10 and 11 as shown in Fig. 13. The monitoring terminal 85 receives the monitoring result response signal S87a and stores the related received monitoring result response signal S87a in a not illustrated memory. Note that, in the monitoring module 84, in order to output the monitoring result response signal to both of the E/O converters 52 and 56, it is also possible to designate both of the optical transmission lines 10 and 11 as the reception route information in the monitoring result request signal S86a or it is also possible to set the system in advance so that the monitoring module 84 operates in this way before the transmission of the monitoring result request signal S86a.

In this way, in the optical communication system 80, the monitoring terminal 85 substantially simultaneously transmits the monitoring result request signal S86a to the end terminals 81a and 81b and, at the same time, the repeater 82 transmits the monitoring result response signal S87a to the monitoring terminal 85 via both of the optical transmission lines 10 and 11 not according to the reception route information.

Accordingly, according to the optical communication system 80, results of both of the second embodiment and the third embodiment can be obtained.

### Fifth Embodiment

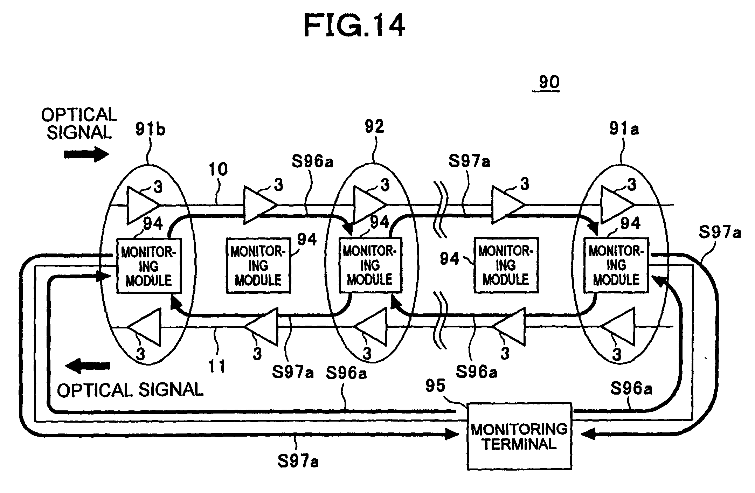

Figure 14 is a view of the configuration of an optical communication system 90 of the present embodiment.

As shown in Fig. 14, the optical communication system 90 has the same configuration as the optical communication system 40 shown in Fig. 4, but is different in operation.

Note that, in Fig. 14, different reference numerals from those in Fig. 4 are assigned to monitoring modules 94, a monitoring terminal 95, end terminals 91a and 91b, and a repeater 92 as they perform different operations from those of the case of the optical communication system 40 shown in Fig. 4.

Below, an explanation will be given focusing on the monitoring modules 94 and the monitoring terminal 95.

### [Monitoring Module 94]

The monitoring module 94 converts a monitoring result request signal S96a to an electrical signal in the O/E converters 51 and 55 shown in Fig. 5A and views the destination address contained in the related electrical signal. When the related destination address points to itself, it views the reception route contained in the related electrical signal. Then, the monitoring module 94 outputs the monitoring result response signal indicating the monitoring result to the E/O converter 52 when the related reception route indicates the optical transmission line 10, outputs the monitoring result response signal indicating the monitoring result to the E/O converter 56 when the related reception route indicates the optical transmission line 11, and outputs the monitoring result response signal indicating the monitoring results to the E/O converters 52 and 56 where the related reception route indicates the optical transmission lines 10 and 11.

Further, the monitoring module 94 contains the transmission route information indicating the route for transmitting a monitoring result response signal S97a in the monitoring result response signal.

Further, the monitoring module 94 specifies for example the transmission route of the monitoring result request signal S96a based on from which of the O/E converters 51 and 52 shown in Fig. 5A the monitoring result request signal was input and contains the transmission route information indicating the related specified transmission route in the monitoring result response signal.

Note that, for the designation of the transmission route in the monitoring result request signal, in the same way as the case of the reception route, for example predetermined flag bits are allocated to a plurality of transmission routes in advance. Designation is indicated when the related flag bit has the logic value "1", and while no designation is indicated by the logic value "0".

### [Monitoring Terminal 95]

The monitoring terminal 95 comprehensively monitors and manages the optical communication system 90 as a whole based on the monitoring results of the monitoring modules 94 the end terminals 91a and 91b and a plurality of repeaters including the repeater 92.

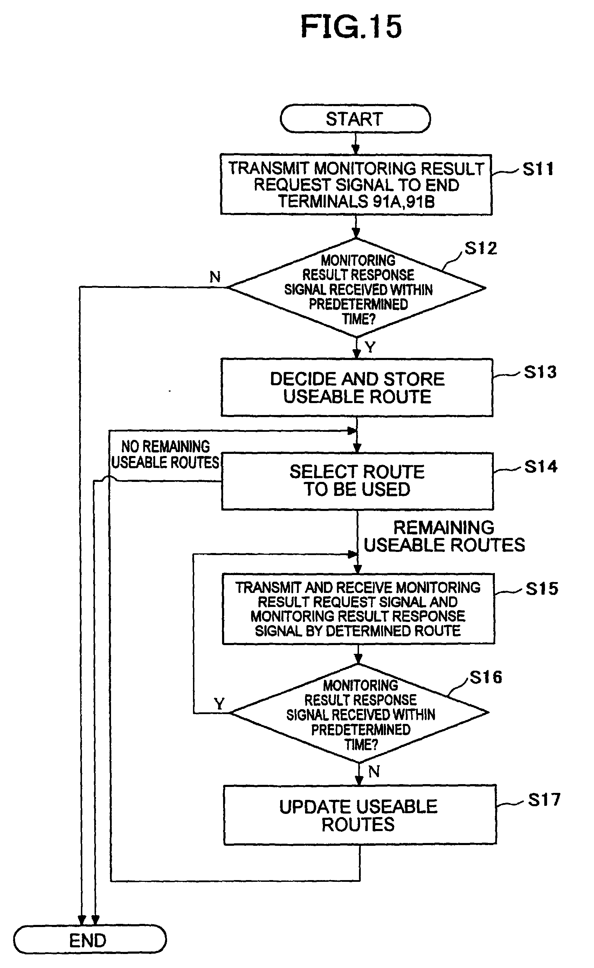

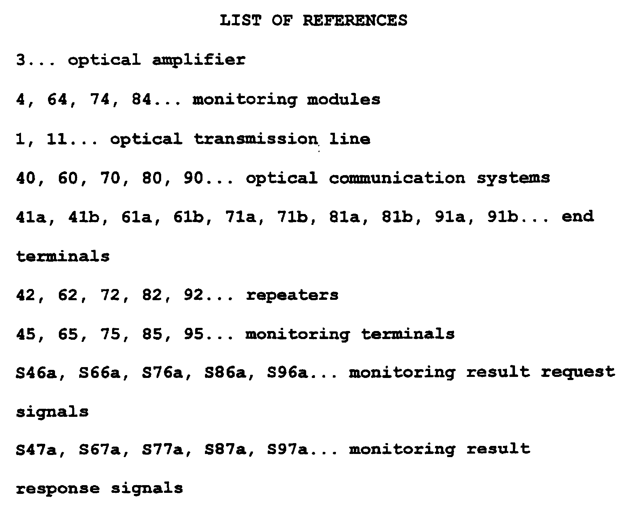

Figure 15 is a flowchart of the processing of the monitoring terminal 95 during communication with the repeater 92.

Step S11: The monitoring terminal 95 transmits to the repeater 92 a first monitoring result request signal S96a respectively designating the optical transmission lines 11 and 10 as the transmission route and the reception route, a second monitoring result request signal S96a designating the optical transmission line 11 as both of the transmission route and the reception route, a third monitoring result request signal S96a respectively designating the optical transmission lines 10 and 11 as the transmission route and the reception route, and a fourth monitoring result request signal S96a designating the optical transmission line 10 as both of the transmission route and the reception route.

At this time, the monitoring terminal 95 designates the reception route in the monitoring result request signal.

Step S12: The monitoring terminal 95 decides whether or not a monitoring result response signal S97a has been received from the repeater 92 within the predetermined time, executes the processing of step S13 where it is decided that it has been received, while decides that communication with the repeater 92 impossible and terminates the processing where it decides that it has not been received.

Note that when the processing is terminated here, the processing is repeated again from step S11 after the elapse of a predetermined time.

Step S13: The monitoring terminal 95 decides which route among routes 1 to 4 shown below are free from a disconnection and can be used based on the monitoring result response signal S97a received from the repeater 92 and stores the result of the related decision in the memory.
Route 1: Monitoring terminal 95 -> end terminal 91a -> repeater 92 -> end terminal 91a -> monitoring terminal 95
Route 2: Monitoring terminal 95 -> end terminal 91a -> repeater 92 -> end terminal 91b -> monitoring terminal 95
Route 3: Monitoring terminal 95 -> end terminal 91b -> repeater 92 -> end terminal 91a -> monitoring terminal 95
Route 4: Monitoring terminal 95 -> end terminal 91b -> repeater 92 -> end terminal 91b -> monitoring terminal 95

Step S14: The monitoring terminal 95 decides based on the result of the decision stored in the memory whether or not there are any remaining useable routes and, when there are remaining useable routes, selects one from among them. Further, the monitoring terminal 95 terminates the processing when there is no remaining useable route.

Step S15: The monitoring terminal 95 transmits the monitoring result request signal S96a containing the destination address indicating the address of the repeater 92 and the reception route designated by the route selected at step S14 to the end terminal 91a or 91b corresponding to the transmission route designated by the selected route.

Step S16: The monitoring terminal 95 decides whether or not the monitoring result response signal S97a from the repeater 92 has bean received within the predetermined time, executes the processing of step S15 again when it decides that it has been received, while executes the processing of step S17 where it decides that it has not been received.

Step S17: The monitoring terminal 95 deletes the route selected at step S14 from the useable routes stored in the memory and then performs the processing of step S14 again.

In the optical communication system 90, for example, when there is a disconnection in the optical transmission line 10 between the repeater 92 and the end terminal 91a in the state where the optical transmission lines 11 and 10 are respectively selected as the transmission route and the reception route (state where the route 1 is selected), for example, the state is automatically switched to the state where the optical transmission lines 10 and 11 are selected as the transmission route and the reception route (state where the route 3 is selected).

As explained above, according to the optical communication system 90, a routes free from the disconnection are detected and stored and one selected route is repeatedly used until a disconnection occurs in the route. For this reason, at least one of the monitoring result request signal and the monitoring result response signal is not simultaneously transmitted and received a plurality of times as in the optical communication systems of the second to fifth embodiments as mentioned above, so the traffic of the optical signals transmitted through the optical transmission lines 10 and 11 can be suppressed.

Further, according to the optical communication system 90, the time from when the monitoring terminal 95 transmits the monitoring result request signal S96a to when it receives the monitoring result response signal S97a can be made short similar to the fifth embodiment.

This embodiment corresponds to claim 5. Even if trouble occurs on the transmission line, it is possible to select the route having the highest possibility of success of transmission from among a plurality of transmission lines and transmit the monitoring result request signal again, therefore it is possible to shorten the time by the amount of the retransmission at the time of occurrence of a disconnection or other trouble. In addition, it is possible to keep a plurality of monitoring result request signals or monitoring result response signals from being transmitted and therefore the traffic in the transmission lines.

The present invention is not limited to these embodiments.

For example, in the embodiments, the case where there were two transmission routes and reception routes each was illustrated, but the number of them is optional.

Further, the example of an optical communication system was shown here, but the system may be an electrical communication system as well.

Further, in the monitoring terminal 45 of the first embodiment, as shown in Fig. 7, the case where the transmission route was changed at step S3 and the reception route was changed at step S5 was shown, but it is also possible to change the reception route at step S3 and change the transmission route at step S5. Further, it is also possible to simultaneously change the transmission route and the reception route.

### INDUSTRIAL APPLICABILITY

As explained above, according to the communication system and method of the present invention and the communication apparatus of the same, monitoring results of the processing means can be more reliably collected in the monitoring result collecting means.

## Claims

1. A communication system comprising:
a processing means provided on a transmission line, performing a predetermined processing using a signal transmitted over said transmission line, monitoring a state of the related processing, and transmitting a monitoring result response signal indicating the result of said monitoring via said transmission line in response to a monitoring result request signal received via said transmission line, and
a monitoring result collecting means for transmitting said monitoring result request signal to said processing means via said transmission line and receiving said monitoring result response signal from said processing means, wherein
said monitoring result collecting means changes at least one of a transmission route of said monitoring result request signal to said processing means and a reception route of said monitoring result request signal from said processing means where it does not receive said monitoring result response signal after an elapse of a predetermined time after transmitting said monitoring result request signal and performs the transmission and reception of said monitoring result request signal and said monitoring result response signal by using the route after the related change.

2. A communication system as set forth in claim 1, wherein
said monitoring result collecting means transmits said monitoring result request signal containing information indicating the reception route of said monitoring result response signal to said processing means, and
said processing means transmits said monitoring result response signal to said monitoring result collecting means via said reception route based on the received monitoring result request signal.

3. A communication system as set forth in claim 1 or 2, wherein said monitoring result collecting means transmits said monitoring result request signal to said processing means by a plurality of different transmission routes without waiting for a decision of reception of said monitoring result response signal.

4. A communication system as set forth in any one of claims 1 to 3, wherein said processing means transmits said monitoring result response signal to said monitoring result collecting means by a plurality of different reception routes in response to said received monitoring result request signal.

5. A communication system as set forth in claim 1 or 2, wherein said monitoring result collecting means
stores useable routes among routes of said transmission line for transmitting and receiving said monitoring result request signal and said monitoring result response signal in advance,
selects one route among the related stored useable routes, and
performs the transmission and reception of said monitoring result request signal and said monitoring result response signal by using the related selected route.

6. A communication apparatus performing a predetermined processing using a signal transmitted over a transmission line, transmitting a monitoring result request signal to a processor for monitoring the state of the related processing via said transmission line, and receiving a monitoring result response signal from said processor via said transmission line, wherein,
when said monitoring result response signal is not received after an elapse of a predetermined time from the transmission of said monitoring result request signal, at least one of a transmission route of said monitoring result request signal to said processor and a reception route of said monitoring result response signal from said processor is changed, and the transmission and reception of said monitoring result request signal and said monitoring result response signal are carried out by using the route after the related change.

7. A communication apparatus as set forth in claim 6, which transmits said monitoring result request signal containing information indicating the reception route of said monitoring result response signal to said processor and receives said monitoring result response signal from said processor via said reception route.

8. A communication apparatus as set forth in claim 6 or 7, which transmits said monitoring result request signal to said processing means by a plurality of different transmission routes without waiting for a decision of reception of said monitoring result response signal.

9. A communication apparatus as set forth in claim 6 or 7, which
stores in advance useable routes among routes of said transmission line for transmitting and receiving said monitoring result request signal and said monitoring result response signal,
selects one route among the related stored useable routes, and performs the transmission and reception of said monitoring result request signal and said monitoring result response signal by using the related selected route.

10. A communication method comprising the steps of
performing predetermined processing using a signal transmitted a transmission line,
transmitting a monitoring result request signal to a processor for monitoring a state of the related processing via said transmission line,
changing at least one of a transmission route of said monitoring result request signal to said processor and a reception route of said monitoring result response signal from said processor when said monitoring result response signal is not received after an elapse of a predetermined time from the transmission of said monitoring result request signal, and
performing the transmission and reception of said monitoring result request signal and said monitoring result response signal by using the route after the related change.

11. A communication method as set forth in claim 10, further comprising the steps of
transmitting said monitoring result request signal containing information indicating the reception route of said monitoring result response signal to said processor and
receiving said monitoring result response signal from said processor via said reception route.

12. A communication method as set forth in claim 10 or 11, further comprising the step transmitting said monitoring result request signal to said processor by a plurality of different transmission routes without waiting for a decision of reception of said monitoring result response signal.

13. A communication method as set forth in claim 11 or 12, further comprising the steps of
specifying in advance useable routes among routes of said transmission line for transmitting and receiving said monitoring result request signal and said monitoring result response signal,
selecting one route among the related stored useable routes, and
performing the transmission and reception of said monitoring result request signal and said monitoring result response signal by using the related selected route.
